# EUROPÄISCHE PATENTSCHRIFT

(11) **EP 3 327 526 B1**
(45) Veröffentlichungstag und Bekanntmachung des Hinweises auf die Patenterteilung: **19.06.2019**
(21) Anmeldenummer: 17201130.6
(22) Anmeldetag: 10.11.2017
(51) Int. Cl.: G05B 19/418, H04W 4/38, H04W 4/40, H04W 4/80, H04L 29/08

(54) **UNBEMANNTE FAHRZEUGE ZUR PROZESSÜBERWACHUNG IN INDUSTRIEANLAGEN**
UNMANNED VEHICLES FOR PROCESS MONITORING IN INDUSTRIAL FACILITIES
VÉHICULES SANS CONDUCTEUR DESTINÉS À LA SURVEILLANCE DE PROCESSUS DANS UNE INSTALLATION INDUSTRIELLE

(30) Priorität: 25.11.2016 DE 102016223437
(43) Veröffentlichungstag der Anmeldung: 30.05.2018
(73) Patentinhaber: SMS Group GmbH, 40237 Düsseldorf (DE)
(72) Erfinder: Haschke, Thomas, 57319 Bad Berleburg (DE); Müller, Torsten, 57223 Kreuztal (DE); Dilthey, Steffen, 57223 Kreuztal (DE)
(74) Vertreter: Klüppel, Walter

(56) Entgegenhaltungen:
- WO-A1-2007/021425
- WO-A1-2016/059214
- US-A1- 2014 024 313

## Beschreibung

### Technisches Gebiet

Die Erfindung betrifft ein Verfahren und ein System zur Prozessüberwachung in einer Industrieanlage, insbesondere einer hüttentechnischen Anlage, wie etwa einem Kalt- oder Warmwalzwerk, einer Bandbehandlungsanlage oder einem Stahlwerk.

### Hintergrund der Erfindung

In Industrieanlagen werden zunehmend Maschinenkomponenten und Bauteile eingesetzt, die Sensoren oder andere Mittel zur automatischen Überwachung des Betriebs, sowie Vorrichtungen zur eigenständigen Datenverarbeitung aufweisen. Betriebsdaten werden lokal, durch das jeweilige Bauteil autonom aufgezeichnet und verarbeitet, beispielsweise digitalisiert, und an einen Kommunikationspartner, der etwa eine zentrale Datenverarbeitungseinrichtung sein kann, übertragen. Beispielsweise lassen sich auf diese Weise kontinuierlich Betriebsparameter, wie etwa die Drehzahl von Rollen im Walzwerk, Schwingungen, Druck und Temperatur messen, Verschleißprüfungen durchführen, die Produktqualität bestimmen, Fehler erkennen usw. Aus den erfassten Betriebsdaten und gegebenenfalls weiteren Daten, die beispielsweise aus Modellrechnungen gewonnen werden, lässt sich der aktuelle Anlagenzustand bestimmen. Die Informationen können genutzt werden, um durch Kommunikation mit entsprechend ausgerüsteten Bauteilen die Prozessführung in der Anlage zu optimieren. Wenn beispielsweise ein solches "intelligentes" Bauteil aufgrund von Überlastung einen Schaden erkennt, kann es der Prozessführung mitteilen, dass eine Wartung erforderlich ist. Die Prozessführung wiederum kann veranlassen, dass das Bauteil bis zur Reparatur oder zum Austausch weniger belastet wird. Der Zugriff auf die Daten, die lokal an den jeweiligen Bauteilen ermittelt wurden, sowie die Kommunikation zur Steuerung derselben erfolgt in vielen Fällen drahtlos.

So beschreibt die WO 2007/021425 A1 ein Verfahren zur Verfolgung von Betriebsparametern eines Antriebsstrangs in einem Walzwerksystem, bei dem die von Sensoren erfassten und lokal digitalisierten Daten über RF-Signale (Hochfrequenzsignale; RF für "radio frequency") an eine Fernverarbeitungseinheit übertragen werden.

Die oben skizierte Entwicklung hat zu einem hohen Datenverkehr in Industrieanlagen geführt. In modernen hüttentechnischen Anlagen werden beispielsweise mehrere tausend Messsignale erfasst, übertragen und verarbeitet. Hinzu kommen weitere Kommunikationen, etwa zwischen dem Bedienpersonal, mit Hallenkränen usw., über LAN, WLAN, Bluetooth, Bluetooth LE, RFID, NFC, Funk. Dadurch werden auf relativ engem Raum viele Frequenzen oder Kommunikationskanäle belegt, die sich zum einen gegenseitig stören können, zum anderen kann eine Falschbelegung bzw. eine beabsichtigte oder unbeabsichtigte Mehrfachnutzung einer Frequenz zu Störungen oder Fehlfunktionen im Produktionsprozess führen. Die Bestimmung der Fehlerursache kann in solchen Fällen schwierig sein und zu unnötigen Produktionsausfällen führen.

Auch die Prozessüberwachung der Industrieanlage, darunter fallen insbesondere die Überwachung, Steuerung und Wartung von Maschinen, Komponenten und "intelligenten" Bauteilen, kann vom hohen Datenverkehr in der Industrieanlage betroffen sein.

Die US 2014/0024313 A1 beschreibt ein Netzwerk zum Beziehen von Daten in landwirtschaftlichen und anderen Anwendungen.

### Darstellung der Erfindung

Eine Aufgabe der Erfindung besteht darin, ein Verfahren und ein System zur Prozessüberwachung in einer Industrieanlage, insbesondere einer hüttentechnischen Anlage, bereitzustellen, mit denen die Zuverlässigkeit und Effizienz der Prozessüberwachung, Steuerung und/oder Wartung verbessert werden können.

Gelöst wird die Aufgabe mit einem Verfahren mit den Merkmalen des Anspruchs 1, sowie einem System mit den Merkmalen des Anspruchs 16. Vorteilhafte Weiterbildungen folgen aus den Unteransprüchen, der folgenden Darstellung der Erfindung sowie der Beschreibung bevorzugter Ausführungsbeispiele.

Das erfindungsgemäße Verfahren ist zur Prozessüberwachung in einer Industrieanlage ausgelegt, in der Daten vorzugsweise drahtlos zwischen Anlagenkomponenten, dem Bedienpersonal usw. ausgetauscht werden. Insbesondere kommt das Verfahren in einer hüttentechnischen Anlage, besonders bevorzugt in einem Kalt- oder Warmwalzwerk, einer Bandbehandlungsanlage oder einem Stahlwerk zum Einsatz, da in derartigen Anlagen ein hoher Datenverkehr herrscht, eine Vielzahl von Messsignalen erfasst, ausgetauscht und der Steuerung der Anlage zugrunde gelegt werden.

Zur Lösung der Aufgabe wird wenigstens ein unbemanntes Fahrzeug (auch als "UF" bezeichnet) bereitgestellt, das eine Sende- und Empfangseinrichtung zur Übermittlung und zum Empfang von Daten und eine Datenverarbeitungseinrichtung aufweist. Ferner werden ein oder mehrere Kommunikationspartner (auch als "KP" bezeichnet) bereitgestellt, die jeweils zumindest eine Sendeeinrichtung zur Übermittlung von Daten an das UF aufweisen. Vorzugsweise weist der KP ferner eine Empfangseinrichtung zum Empfang von Daten auf. Die Sende- und Empfangseinrichtungen sind hierbei eingerichtet, d.h. aufeinander abgestimmt, um zwischen dem unbemannten Fahrzeug und dem Kommunikationspartner Daten auszutauschen. Zur Übermittlung von Daten von dem UF zum KP begibt sich das UF an einen Übertragungsort in Kommunikationsnähe des KP, um anschließend den Datenaustausch vorzunehmen. Das UF und/oder der KP weisen vorzugsweise eine Einrichtung zur Speicherung von Daten, besonders bevorzugt zur temporären Speicherung von Daten, auf. Zumindest einer der Kommunikationspartner ist ein Bauteil einer Industrieanlage, das so eingerichtet ist, dass es Betriebsdaten eigenständig aufzeichnen, vorzugsweise verarbeiten und an das am Übertragungsort befindliche unbemannte Fahrzeug übertragen kann.

Gemäß einer bevorzugten Ausführungsform können das unbemannte Fahrzeug und/oder der Kommunikationspartner einen Zeit- und/oder Ortsstempel und/oder eine Komponenten-ID austauschen und mitprotokolieren. Durch eine bidirektionale Verwendung von Zeit- und/oder Ortsstempeln und/oder einer Komponenten-ID kann vor allem bei einer weiteren Verarbeitung der Daten, z. B. durch ein Prozessleitsystem, sichergestellt werden, dass die Daten dem richtigen Kommunikationspartner, sprich der richtigen Anlagenkomponente zugeordnet werden. Gleichzeitig kann durch die Verwendung von Komponenten-IDs sichergestellt werden, dass nur autorisierte Komponenten miteinander kommunizieren, so dass z. B. die Möglichkeit von Industriespionage zumindest reduziert wird. Die Zeit- und/oder Ortsstempel sowie die Komponenten-ID werden vorzugsweise während der Kommunikation mitprotokolliert, vorzugsweise vom UF oder von beiden Kommunikationspartnern.

Da die ausgetauschten und mitprotokollierten Daten von einem KP nicht zwangsläufig direkt vom UF an einen weiteren Kommunikationspartner übergeben werden müssen, besitzt das UF eine Vorrichtung zum Speichern der Daten, vorteilhafterweise auch der KP. Damit wird z. B. sichergestellt, dass die Daten auch nach dem Ende der Kommunikation zur Verfügung stehen und beispielsweise in einem späteren Schritt weiterverarbeitet werden können.

Die Datenverarbeitungseinrichtung des UF ist so eingerichtet, dass sie die vom KP empfangenen Daten auswerten kann, um Informationen über den Betriebszustand des KP zu gewinnen. Die Datenverarbeitungseinrichtung des UF ist beispielsweise ein sogenanntes "embedded system" und/oder weist einen Mikro-PC auf.

Der Übertragungsort kann ein wohl definierter Ort in der näheren Umgebung des Kommunikationspartners sein, der Übertragungsort kann aber auch ein Bereich sein, innerhalb dem eine störungsfreie Kommunikation gewährleistet ist. Der mitprotokollierte Ortsstempel ist in diesem Zusammenhang geeignet, um den Übertragungsort, und ggf. damit auch zusätzlich den oder die Kommunikationspartner zu identifizieren.

Anstatt den Datenaustausch mit einer hohen Übertragungsleistung, über eine lange Strecke in der Industrieanlage durchzuführen, begibt sich das unbemannte Fahrzeug gezielt in die Umgebung eines Kommunikationspartners, d.h. an den Übertragungsort, um den Datenaustausch über eine vergleichsweise kurze Distanz zu realisieren. Auf diese Weise wird eine sichere und zuverlässige Datenübertragung sichergestellt. Die Datenübertragung wird vom Datenverkehr im "Hintergrund" der Industrieanlage nicht oder nur wenig beeinflusst, es wird aufgrund der Nähe zwischen dem UF und dem KP sichergestellt, dass selbst bei einer beabsichtigten oder unbeabsichtigten Verwendung einer bereits belegten Frequenz keine Kommunikationsstörung auftritt. Die Störung des Funkverkehrs ist hierbei ein Aspekt. Ein anderer ist, dass zum Beispiel bei Bluetooth die Übertragungsentfernung sehr begrenzt ist und zusätzlich durch viel Metall in der Industrieanlage beeinträchtigt wird. Indem die Daten mittels des unbemannten Fahrzeugs von dem entsprechenden Kommunikationspartner auf diese Weise abgeholt werden, können ferner die erforderlichen Übertragungsleistungen verringert werden. Es sei darauf hingewiesen, dass die Datenübertragung zwischen dem UF und KP vorzugsweise drahtlos erfolgt. Allerdings ist es in bestimmten Anwendungsfällen auch denkbar, dass das UF und der KP zur besonders sicheren Übertragung in physischen Kontakt treten. Dazu können das UF und der KP beispielsweise mit einer oder mehreren dafür geeigneten Steckverbindungen und/oder Kontaktstellen ausgerüstet sein.

Nachdem ein sicherer Datentransfer zwischen dem KP und dem UF stattgefunden hat, ist das UF aufgrund der fahrzeugeigenen Datenverarbeitungseinrichtung in der Lage, Informationen über den Betriebszustand des KP zu gewinnen, die wiederrum genutzt werden können, um als Ergebnis der Auswertung Maßnahmen zur Steuerung und/oder Wartung des KP und/oder zur Prozessführung in der Industrieanlage zu treffen. Die Betriebsdaten des KP und etwaige Steuerung- und/oder Wartungsdaten müssen somit nicht über lange Strecken in der Industrieanlage übertragen werden, sondern werden lokal ausgetauscht und zumindest teilweise verarbeitet. Gleichzeitig erlaubt die Mobilität des UF eine hohe Flexibilität und Effizienz, denn ein UF mit Auswertungstechnik "on-board" kann mehrere KP je nach Bedarf bedienen.

Weitere Vorteile der Erfindung sind die Minimierung der zum Betrieb bzw. zur Überwachung des Produktionsprozesses notwendigen Sensorik und dem damit verbundenen Aufwand für die Installation, den Betrieb sowie die Wartung bzw. Instandhaltung. Darüber hinaus kann mit der Erfindung die Sicherheit der in der Anlage arbeitenden Personen erhöht werden, da mit Hilfe der Erfindung z. B. Aufgaben in schwer zugänglichen oder (lebens-) gefährlichen Bereichen durchgeführt werden können. Generell hilft die Erfindung dabei, den Aufwand für spezielle, üblicherweise von einem Menschen durchgeführte Arbeiten zu minimieren.

Vorzugsweise ist die Datenverarbeitungseinrichtung des unbemannte Fahrzeugs so eingerichtet ist, dass diese einen Diagnosemodus des Kommunikationspartners aktivieren kann, wodurch das UF als mobile Steuereinheit eine zuverlässige und flexible Überwachung des Prozesses in der Industrieanlage gewährleistet. Die Aktivierung des Diagnosemodus erfolgt vorzugsweise in Zusammenwirkung mit der Sende- und Empfangseinrichtung des UF. Allerdings ist es auch möglich, dass die Aktivierung mechanisch erfolgt, etwa durch Betätigung eines dafür vorgesehenen Schalters.

Vorzugsweise ist die Datenverarbeitungseinrichtung des unbemannten Fahrzeugs so eingerichtet, dass diese ein aktuelles oder zukünftiges Betriebsversagen des Kommunikationspartners erkennen kann. Daraus lassen sich Handlungsanweisungen ableiten, die dem betreffenden oder einem anderen KP übermittelt werden können. Erkennt das UF beispielsweise einen Defekt des KP oder ein bevorstehendes Versagen, etwa einen zu erwartenden Bauteildefekt, kann das UF einen Stopp der Anlage veranlassen, einer Basis oder einem Prozessleitsystem mitteilen, dass der entsprechende KP nicht mehr hoch belastet werden darf, eine Wartung einleiten usw.

Vorzugsweise kann das unbemannte Fahrzeug ein Ergebnis der Auswertung an einen oder mehrere andere Kommunikationspartner übertragen, beispielsweise an eine Bedienperson, ein mobiles Endgerät, eine Basis usw. Maßnahmen zur Wartung und/oder Prozessführung können dann auch von diesem anderen KP eingeleitet werden.

Vorzugsweise kann das unbemannte Fahrzeug als Ergebnis der fahrzeugseitigen Auswertung selbstständig ein Wartungsintervall und/oder Prüfintervall beim Kommunikationspartner anpassen. Deuten die Auswertungsergebnisse beispielsweise auf ein mögliches Problem des KP hin, etwa ein Bauteilversagen, so kann das UF eigenständig die "Besuchsintervalle" bei diesem KP verkürzen, wodurch das KP vom UF in einem kürzeren Intervall aufgesucht und überprüft wird, anstatt in einem voreingestellten regulären Intervall. Umgekehrt kann das UF so eingerichtet sein, dass es das Wartungs- oder Prüfintervall selbstständig verlängert, wenn die Auswertungsergebnisse wieder eine Verbesserung des Funktions- oder Betriebszustands erkennen lassen. Alternativ oder zusätzlich kann das UF so eingerichtet sein, dass es beim KP selbst dessen Wartungs- und/oder Prüfintervall ändert. Dazu muss der KP so eingerichtet sein, dass dieser eigenständig eine Wartung und/oder Prüfung durchführen kann, wobei das Ergebnis wiederum an das UF übergeben werden könnte.

Als Bauteil kommt
beispielsweise in Frage: eine Rolle, etwa eine Arbeitswalze, Stützwalze oder Transportrolle in einem Walzwerk, eine Antriebsvorrichtung, etwa ein Elektromotor, ein Drehlager usw. Den Sende- und/oder Empfangseinrichtungen des Bauteils oder der mehreren Bauteile sind vorzugsweise jeweils Vorrichtungen, beispielsweise Sensoren mit Datenverarbeitungseinheit, zugeordnet und mit diesen physisch oder drahtlos verbunden, die so eingerichtet sind, dass sie Betriebsdaten eigenständig aufzeichnen und gegebenenfalls aufbereiten, etwa digitalisieren, können. Auf diese Weise lässt sich die Zuverlässigkeit des Produktionsprozesses der Industrieanlage erhöhen, denn durch den UFgestützten Datenaustausch werden Kommunikationsstörungen im Bereich der Prozessüberwachung und Prozesssteuerung verringert.

Vorzugsweise weist das unbemannte Fahrzeug einen Akku als elektrische Energiequelle für den Betrieb desselben auf, wobei am Übertragungsort vorzugsweise eine Ladeeinrichtung zum automatischen Laden des Akkus oder eine Einrichtung zum automatischen Austausch des Akkus vorgesehen ist. So kann die Kommunikationszeit zwischen dem UF und dem KP effektiv zum Aufladen des Akkus oder zum Austausch desselben genutzt werden. Alternativ kann das UF auch eine andere, autarke Energiequelle bzw. Antriebsquelle verwenden, z. B. einen Verbrennungsmotor oder z. B. im Fall eines schienengebundenen UF eine permanente Energiequelle. Der "Betrieb" des UF umfasst zumindest das eigenständige Bewegen in der Industrieanlage und den Datenaustausch mit dem entsprechenden KP. Wenn das UF ein unbemanntes Luftfahrzeug ist, vorzugsweise ein Multikopter, dann kann am Übertragungsort eine Landeplattform vorgesehen sein, auf der das unbemannte Luftfahrzeug zum Datenaustausch landet, wodurch der Akku geschont wird. Die Landeplattform kann mit der erwähnten Ladeeinrichtung oder der Einrichtung zum Austausch des Akkus ausgerüstet sein.

Vorzugsweise ist das unbemannte Fahrzeug so eingerichtet, dass es von einem Übertragungsort aus mit mehreren Kommunikationspartnern Daten austauschen kann, wodurch der Datenaustausch, d.h. das "Einsammeln" oder "Verteilen" von Daten besonders effizient erfolgen kann. Eine etwaige Verwendung von Komponenten-IDs und/oder Zeit- und/oder Ortsstempeln ermöglicht dabei die Zuordnung der Daten zum jeweiligen KP.

Vorzugsweise sind mehrere Kommunikationspartner vorgesehen, wobei einer derselben eine Basis ist, die so eingerichtet ist, dass sie Daten, die sie von dem UF empfängt, zur Überwachung und/oder Steuerung des Produktionsprozesses der Industrieanlage weiterverarbeiten kann. Vorzugsweise erfolgen der Datenaustausch zwischen dem UF und der Basis und zwischen dem UF und einem oder mehreren KP über denselben Übertragungskanal, vorzugsweise mittels derselben Funkfrequenz. Auf diese Weise dient das UF als "mobiler Repeater" zur Reichweitenerhöhung.

Auf analoge Weise kann das UF so eingerichtet sein, dass es eine Kommunikation zwischen mehreren KP ermöglicht, so dass das UF als "mobiler Repeater" zwischen mehreren KP fungiert, wodurch die KP miteinander Daten austauschen und sich ggf. aufeinander abstimmen können. Indem ein UF Daten von einem KP zu einem oder mehreren anderen KP überträgt und so eine Kommunikation zwischen einem oder mehreren KP herstellt, kann insbesondere der Produktionsprozess untereinander abgestimmt werden.

Ein oder mehrere KP können mobile Endgeräte sein, über die ein UF auch mit einem Menschen, etwa einer Bedienperson, kommunizieren kann.

Vorzugsweise sind mehrere Kommunikationspartner vorgesehen, wobei zumindest einer der Kommunikationspartner ein weiteres unbemanntes Fahrzeug ist. Beispielsweise können sich mehrere als "Schwarm" arrangierte UF zwischen einem ersten KP, beispielsweise einem ersten Bauteil, und einem letzten KP, beispielsweise einer Basis, aufhalten. Auf diese Weise können die UF neben den Informationen, die sie mit den benachbarten UF austauschen, optional Informationen mit anderen KP, etwa Bauteilen, austauschen und diese gegebenenfalls entlang der UF-Kette bis zur Basis weiterleiten. Somit können die UF genutzt werden, um Informationen über eine große Distanz weiterzuleiten, gegebenenfalls zu verstärken, zu bündeln, zu verteilen und/oder zu verarbeiten, ohne dass der übrige Funkverkehr gestört wird und ohne dass die einzelnen UF große Distanzen zurücklegen müssen, um die Daten von den Kommunikationspartnern einzusammeln. Dazu können die UF auf speziellen Landeplattformen landen bzw. diese aufsuchen oder an bestimmte Ruhestellen andocken, um Energie zu sparen oder sich aufzuladen, wobei sie somit nicht ständig in Bewegung sein müssen.

Vorzugsweise ist die Sendeleistung des unbemannten Fahrzeugs größer, als die des Kommunikationspartners, wodurch das UF die vom KP eingesammelten Daten über eine relativ dazu größere Distanz beispielsweise an die Basis oder ein anderes UF weiterleiten kann.

Vorzugsweise ist das unbemannte Fahrzeug so eingerichtet, dass es den Übertragungskanal, etwa die Funkfrequenz, zum Datenaustausch anpassen kann. Dadurch lassen sich etwaige Kommunikationsstörungen in der Industrieanlage noch zuverlässiger vermeiden. Die Anpassung des Übertragungskanals kann beispielsweise in Abhängigkeit des Kommunikationspartners und/oder des Aufenthaltsorts des unbemannten Fahrzeugs und/oder der Entfernung des unbemannten Fahrzeugs zum Kommunikationspartner und/oder der freien Übertragungskanäle in der Industrieanlage und/oder der zu übertragenden Datenmenge erfolgen.

Die oben dargelegte Aufgabe wird ferner von einem System zur Prozessüberwachung in einer Industrieanlage gelöst, in der Daten vorzugsweise drahtlos ausgetauscht werden. Insbesondere kommt das System, so wie das Verfahren, in einer hüttentechnischen Anlage, besonders bevorzugt in einem Kalt- oder Warmwalzwerk, einer Bandbehandlungsanlage oder einem Stahlwerk zum Einsatz. Das System weist wenigstens ein unbemanntes Fahrzeug, das eine Sende- und Empfangseinrichtung zur Übermittlung, vorzugsweise drahtlos, und zum Empfang, vorzugsweise drahtlos, von Daten und eine Datenverarbeitungseinrichtung aufweist, und einen oder mehrere Kommunikationspartner auf, die jeweils eine Sendeeinrichtung zum Übermitteln, vorzugsweise drahtlos, von Daten und vorzugsweise eine Empfangseinrichtung zum Empfang, vorzugsweise drahtlos, von Daten aufweisen; Die Sende- und Empfangseinrichtungen sind eingerichtet, um zwischen dem unbemannten Fahrzeug und dem Kommunikationspartner Daten auszutauschen. Das System ist so eingerichtet, dass es ein Verfahren nach einem der obigen Ausführungsformen ausführen kann.

Die beschriebenen Verfahren und Systeme kommen bevorzugt in hüttentechnischen Anlagen, insbesondere Kalt- oder Warmwalzwerken, Stahlwerken oder Bandanlagen zur Anwendung. Doch die Erfindung kann auch in anderen Industrieanlagen eingesetzt werden, sofern ein zuverlässiger Datenaustausch zwischen Maschinen, Bauteilen und/oder Datenverarbeitungseinrichtungen durchzuführen ist, insbesondere in einer Umgebung hohen Datenverkehrs.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung der bevorzugten Ausführungsbeispiele erfolgt dabei unter Bezugnahme auf die begleitenden Zeichnungen.

### Kurze Beschreibung der Figuren

Die Figuren 1A und 1B zeigen schematisch den Einsatz eines unbemannten Fahrzeugs zum Datenaustausch mit einem Bauteil einer Industrieanlage in einer Industrieanlage.
Die Figur 2 zeigt schematisch den Einsatz eines unbemannten Fahrzeugs zum Datenaustausch mit mehreren Bauteilen.
Die Figur 3 zeigt schematisch den Einsatz eines unbemannten Fahrzeugs zum Datenaustausch mit mehreren Bauteilen und einer Basis.
Die Figur 4 zeigt schematisch den Einsatz mehrerer unbemannter Fahrzeuge zum Datenaustausch mit mehreren Kommunikationspartnern.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente mit identischen Bezugszeichen versehen, und auf eine wiederholende Beschreibung dieser Elemente wird teilweise verzichtet, um Redundanzen zu vermeiden.

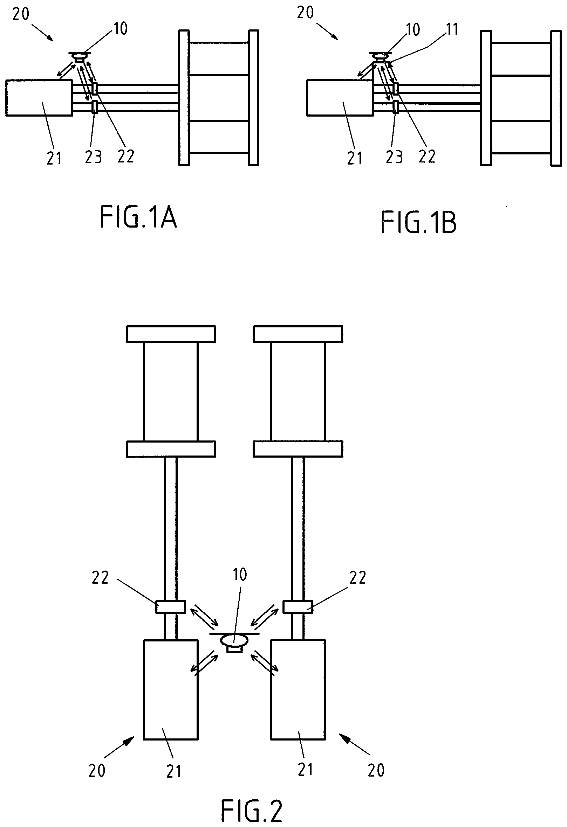

Die Figuren 1A und 1B zeigen schematisch den Einsatz eines unbemannten Fahrzeugs (im Folgenden auch als "UF" bezeichnet) 10 zum Austausch von Informationen mit einem Kommunikationspartner (im Folgenden auch als "KP" bezeichnet) in einer Industrieanlage. Als KP kann etwa eine Maschine, ein Bauteil einer Industrieanlage, eine Komponente usw. in einer Industrieanlage fungieren, die der Einfachheit halber zusammenfassend als "Bauteil" oder "Komponente" bezeichnet und mit dem Bezugszeichen 20 versehen werden. Die Bauteile 20 weisen jeweils eine oder mehrere Sende- und/oder Empfangseinrichtungen 21, 22, 23 auf, um Betriebsdaten mit dem UF 10 auszutauschen. Allerdings können auch andere Einrichtungen Kommunikationspartner für das UF 10 sein, beispielsweise eine Basis 30, weitere UF 10, die weiter unten im Detail beschrieben sind, und/oder mobile Endgeräte, über die ein UF 10 auch mit einem Menschen, etwa einer Bedienperson, kommunizieren kann.

Den Sende- und Empfangseinrichtungen 21, 22, 23 sind jeweils Vorrichtungen (beispielsweise Sensoren mit Datenverarbeitungseinheit) zugeordnet und mit diesen physisch oder drahtlos verbunden, die die so eingerichtet sind, dass sie z. B. Betriebsdaten eigenständig aufzeichnen und gegebenenfalls aufbereiten, etwa digitalisieren, können. Darüber hinaus ist es möglich, dass eine oder mehrere Komponenten 20, insbesondere deren Datenverarbeitungseinheiten, so eingerichtet sind, dass auf diesen Modelle laufen, etwa aus den Betriebsdaten weitere Daten berechnet werden können, beispielsweise ein Modell, das Rückschlüsse auf etwaige Beschädigungen erlaubt.

Als UF 10 kommen beispielsweise in Frage: fliegende UF, wie etwa Multikopter; sogenannte "Unmanned Aerial Vehicles"; "Micro Aerial Vehicles"; fahrende UF, die freibeweglich oder geführt sind, etwa auf Schienen; schwimmende, tauchende UF; Hybrid-UF usw.

Um eine störungsfreie Kommunikation zu ermöglichen, begibt sich das UF 10 an einen Übertragungsort in Kommunikationsnähe zur Komponente 20. Zu diesem Zweck kann eine definierte Stelle als Übertragungsort oder ein Bereich vorgegeben sein. Befindet sich das UF 10 am Übertragungsort in der Nähe der Komponente 20, kann das UF 10 mit dieser uni- oder bidirektional Informationen austauschen. Zu diesen Informationen gehören beispielsweise auch ein Zeit- und/oder Ortsstempel und/oder eine Komponenten-ID. Durch die optional bidirektionale Verwendung von Zeit- und/oder Ortsstempeln und/oder einer Komponenten-ID kann vor allem bei einer weiteren Verarbeitung der Daten, z. B. durch ein Prozessleitsystem, sichergestellt werden, dass die Daten dem richtigen Kommunikationspartner, sprich der richtigen Anlagenkomponente zugeordnet werden. Gleichzeitig kann durch die Verwendung von Komponenten-IDs sichergestellt werden, dass nur autorisierte Komponenten miteinander kommunizieren, so dass z. B. die Möglichkeit von Industriespionage zumindest reduziert wird. Die Zeit- und/oder Ortsstempel sowie die Komponenten-ID werden vorzugsweise während der Kommunikation mitprotokolliert, vorteilhafterweise von beiden Kommunikationspartnern, vorzugsweise jedoch vom UF.

Da die ausgetauschten und mitprotokollierten Daten von einem KP nicht zwangsläufig direkt vom UF an einen weiteren Kommunikationspartner übergeben werden müssen, besitzt das UF eine Vorrichtung zum Speichern der Daten, vorteilhafterweise auch der KP. Damit wird z. B. sichergestellt, dass die Daten auch nach dem Ende der Kommunikation zur Verfügung stehen und beispielsweise in einem späteren Schritt weiterverarbeitet werden können.

Dazu sind das UF 10 und die Komponente 20 mit aufeinander abgestimmten Sende- und/ Empfangseinheiten 21, 22, 23 ausgestattet, die besonders bevorzugt nur über eine kurze Distanz senden und empfangen, um so die "Funkverschmutzung" sowie den Energieverbrauch der Sende- und Empfangseinrichtungen in der Industrieanlage gering zu halten. Auf diese Weise wird sichergestellt, dass selbst bei einer beabsichtigten oder unbeabsichtigten Verwendung einer bereits belegten Frequenz der übrige Funkverkehr in der Umgebung nicht gestört wird und, umgekehrt, der Funkverkehr in der Umgebung den Datenaustausch nicht stört. Anstatt den Datenaustausch mit einer hohen Übertragungsleistung, über eine lange Strecke in der Industrieanlage durchzuführen, begibt sich das UF 10 gezielt in die Umgebung einer Komponente 20, um den Datenaustausch über eine kurze Distanz zu realisieren. Dadurch verringert sich nicht nur die Gefahr einer Funkstörung, sondern ferner können die Übertragungsleistungen verringert werden. Gegebenenfalls kann die Kommunikation auch durch eine physische Verbindung zwischen dem UF 10 und dem KP erfolgen.

Die Kommunikation zwischen einem UF 10 und den KP ist in den Figuren mittels Pfeilen dargestellt. In den Figuren 1A und 1B erfolgt die Kommunikation mit einer Komponente 20 mit mehreren Sende- und Empfangseinrichtungen 21, 22 und 23, die etwa mehreren Sensoren zugeordnet sein können. Aus der Figur 2 geht hervor, dass von einem definierten Ort eine Kommunikation auch mit mehreren Komponenten 20 (mit zugehörigen Sende- und Empfangseinrichtungen 21 und 22) erfolgen kann.

Optional kann es sich bei dem definierten Ort um eine Plattform oder Andockstelle 11 handeln, wie es aus der Figur 1B hervorgeht. Ein fliegendes UF 10 müsste dann während des Datenaustauschs nicht in der Luft schweben, sondern könnte auf der Plattform 11 landen und so beispielsweise den Akku schonen, aufladen oder austauschen. Dazu kann die Plattform 11 mit einer Einrichtung zum Austausch des Akkus oder mit einer Ladeeinrichtung ausgestattet sein. Das Laden des Akkus kann durch eine physische elektrische Verbindung oder drahtlos erfolgen.

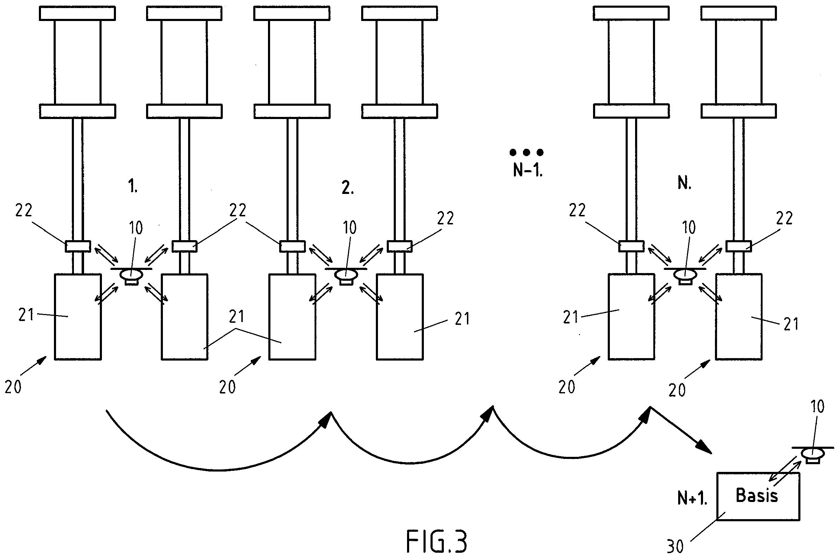

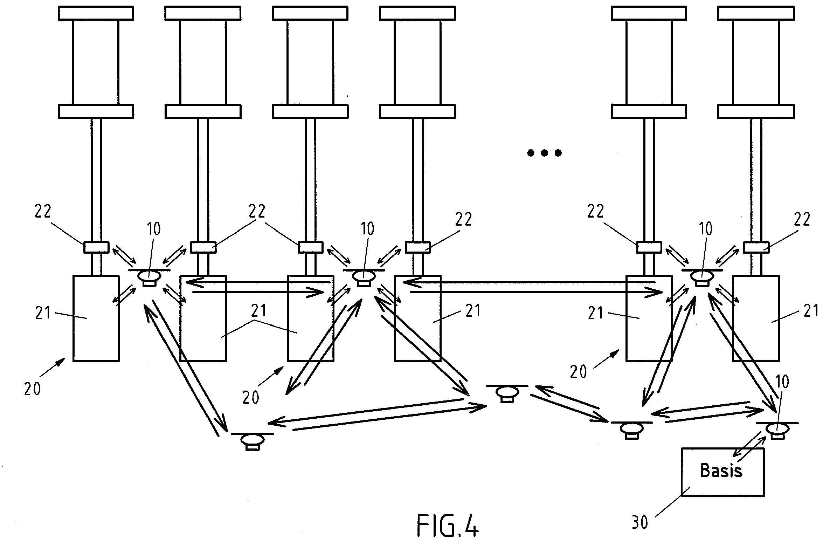

Nachdem das UF 10 Informationen von einer oder mehreren Komponenten 20 empfangen hat, kann es sich an einen anderen Ort bewegen, beispielsweise an einen weiteren Übertragungsort zum Austausch von Informationen mit einer oder mehreren weiteren Komponenten 20 oder einer Basis 30, welche die empfangenen Informationen, z. B. zur Überwachung und Steuerung des Produktionsprozesses, weiterverarbeitet. Das "Einsammeln" oder "Verteilen" von Daten von den bzw. an die Komponenten 20 und der Transport an eine Basis 30 gehen aus den Figuren 3 und 4 hervor.

Auf analoge Weise kann das UF 10 so eingerichtet sein, dass es eine Kommunikation zwischen mehreren KP ermöglicht, so dass das UF 10 als "mobiler Repeater" zwischen mehreren KP fungiert, wodurch die KP miteinander Daten austauschen und sich ggf. untereinander abstimmen können. Indem ein UF 10 Daten von einem KP zu einem oder mehreren anderen KP überträgt und so eine Kommunikation zwischen einem oder mehreren KP herstellt, kann insbesondere der Produktionsprozess untereinander abgestimmt werden.

An der Basis 30 können die gesammelten Daten an weitere Prozesse, beispielsweise an ein Prozessleitsystem übergeben werden. Anschließend kann sich das UF 10 an weitere Übertragungsorte in der Industrieanlage begeben, um erneut Daten mit Kommunikationspartnern auszutauschen. Es sei darauf hingewiesen, dass auch die Basis 30 mit einer Plattform oder Andockstelle ausgerüstet sein kann, wie es oben mit Bezug auf die Plattform/Andockstelle 11 beschrieben ist.

Gemäß einem bevorzugten Ausführungsbeispiel verfügt das UF 10 über eine stärkere Funkleistung als die Komponente 20, wodurch es aus einer größeren Entfernung (im Vergleich zur Komponente 20) z. B. mit der Basis 30 oder einem mobilen Endgerät kommunizieren kann, ohne dass der übrige Funkverkehr gestört wird. Die Störung des Funkverkehrs ist hierbei ein Aspekt. Ein anderer ist, dass zum Beispiel bei Bluetooth die Übertragungsentfernung sehr begrenzt ist und zusätzlich durch viel Metall in der Industrieanlage beeinträchtigt wird. Zum Austausch mit der Basis 30 kann gemäß einem weiteren Ausführungsbeispiel das UF 10 die gleiche Funkfrequenz wie zum Austausch mit der Komponente 20 nutzen. In diesem Fall fungiert das UF 10 als ein "mobiler Repeater" zur Reichweitenerhöhung. Alternativ können unterschiedliche Frequenzen verwendet werden.

Neben einer Kommunikation mit Komponenten 20 der Industrieanlage und einer Basis 30 kann das UF 10 auch mit weiteren UF 10 kommunizieren, wie es in der Figur 4 gezeigt ist. Mehrere als "Schwarm" arrangierte UF 10 können sich zwischen dem ersten KP, beispielsweise einer ersten Komponente 20, und dem letzten KP, beispielsweise der Basis 30, aufhalten. Auf diese Weise können die UF 10 neben den Informationen, die sie mit den benachbarten UF 10 austauschen, optional Informationen mit anderen KP, etwa Komponenten 20, austauschen und diese gegebenenfalls entlang der UF-Kette bis zur Basis 30 weiterleiten. Somit können die UF 10 genutzt werden, um Informationen über eine große Distanz zu transportieren, zu verstärken, zu bündeln, zu verteilen, zu verarbeiten und/oder zu speichern, vorzugsweise temporär, ohne dass der übrige Funkverkehr gestört wird und ohne dass die einzelnen UF 10 große Distanzen zurücklegen müssen, um die Daten der KP 20 einzusammeln oder an die KP 20 zu verteilen. Optional können die UF dazu auch spezielle Plattformen aufsuchen.

Gemäß einem bevorzugten Ausführungsbeispiel sind die UF 10 so eingerichtet, dass sie ihre Funkfrequenzen anpassen können, beispielsweise in Abhängigkeit des betreffenden KP, des Aufenthaltsorts, der Entfernung zum KP, der freien Frequenzen im betreffenden Anlagenbereich, der Datenmenge usw. Diese Anpassung kann für jeden Kommunikationsvorgang individuell erfolgen.

Neben der oben dargelegten Sende- und Empfangseinheit weist das UF 10 und ggf. der KP 20 eine Datenverarbeitungseinrichtung auf, die beispielsweise als sogenanntes "embedded system", Mikro-PC mit Rechen- und Speichereinheit usw. ausgeführt sein kann. Die Datenverarbeitungseinrichtung ist so eingerichtet, dass sie die vom KP 20 empfangenen Daten verarbeiten und auswerten kann. Die vorzugsweise softwaregestützte Auswertung umfasst eine oder mehrere Routinen, welche die Beurteilung des Betriebszustands des entsprechenden KP 20 betreffen. Als Ergebnis der Auswertung kann das UF 10 eigenständig Maßnahmen zur Wartung des KP 20 und/oder zur Prozessführung treffen.

Wenn der KP 20 ein "intelligentes" Bauteil ist, d. h. eine maschinelle Einheit, die z. B. eigenständig Betriebsdaten über die eigene Funktion aufzeichnen und ggf. die Daten verarbeiten kann, dann kann die Datenverarbeitungseinrichtung des UF 10 beispielsweise so eingerichtet sein, dass es einen Diagnosemodus beim KP 20 aktivieren kann, um eine Diagnose über den aktuellen Betriebszustand des KP 20 zu veranlassen. Alternativ oder zusätzlich kann das UF 10 aus der Auswertung der vom KP 20 empfangenen Daten Handlungsanweisungen ableiten und diese Handlungsanweisungen dem KP 20 oder einem anderen KP zukommen lassen. Erkennt das UF 10 beispielsweise ein Versagen des KP 20 oder ein bevorstehendes Versagen, etwa einen zu erwartenden Bauteildefekt, kann das UF 10 einen Stopp der Anlage veranlassen, einer Basis 30, einem Bediener oder einem Prozessleitsystem mitteilen, dass die entsprechende Komponente nicht mehr hoch belastet werden darf, eine Wartung einleiten usw. Das UF 10 kann als mobile Einrichtung die gleichen oder ähnliche Aufgaben übernehmen, welche eine "intelligente" Komponente mit eigener Diagnosefähigkeit oder ein zentrales Prozessleitsystem ausführen kann, wobei das UF 10 hierbei mobiler und flexibler einsetzbar ist. Alternativ oder zusätzlich zu den genannten Eigenschaften kann die Datenverarbeitungseinrichtung des UF 10 so eingerichtet sein, dass dieses die Ergebnisse der Auswertung einem oder mehreren anderen KP 20 mitteilen kann, beispielsweise dem Bedienpersonal, einem Prozessleitsystem oder mobilen Endgeräten, damit weitere Maßnahmen von diesem anderen, angesprochenen KP 20 eingeleitet werden können. Alternativ oder zusätzlich kann die Datenverarbeitungseinrichtung des UF 10 so eingerichtet sein, dass es das Wartungsintervall in Abhängigkeit der Ergebnisse der Auswertung selbstständig anpassen kann. Deuten die Auswertungsergebnisse beispielsweise auf ein mögliches Problem des KP 20 hin, etwa ein Bauteilversagen, so kann das UF 10 eigenständig die "Besuchsintervalle" bei diesem KP 20 verkürzen, wodurch das KP 20 vom UF 10 beispielsweise in einem kurzen Intervall angeflogen und überprüft wird, anstatt in einem voreingestellten regulären Intervall. Umgekehrt kann das UF 10 so eingerichtet sein, dass es das Wartungs- oder Prüfintervall selbstständig verlängert, wenn die Auswertungsergebnisse eine Verbesserung des Funktions- oder Betriebszustands erkennen lassen. Alternativ oder zusätzlich kann das UF 10 so eingerichtet sein, dass es beim KP selbst dessen Wartungs- und/oder Prüfintervall ändert. Dazu muss der KP so eingerichtet sein, dass dieser eigenständig eine Wartung und/oder Prüfung durchführen kann, wobei das Ergebnis wiederum an das UF übergeben werden könnte.
Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 10: Unbemanntes Fahrzeug (UF)
- 11: Plattform für das UF am Übertragungsort
- 20: Komponente/Bauteil einer Industrieanlage
- 21, 22, 23: Sende-/Empfangseinrichtung von Komponenten/Bauteilen
- 30: Basis

## Patentansprüche

1. Verfahren zur Prozessüberwachung in einer Industrieanlage, insbesondere einer hüttentechnischen Anlage, besonders bevorzugt in einem Kalt- oder Warmwalzwerk, einer Bandbehandlungsanlage oder einem Stahlwerk, wobei in der Industrieanlage Daten vorzugsweise drahtlos ausgetauscht werden, wobei das Verfahren aufweist:
Bereitstellen wenigstens eines unbemannten Fahrzeugs (10), das eine Sende- und Empfangseinrichtung zur Übermittlung, vorzugsweise drahtlos, und zum Empfang, vorzugsweise drahtlos, von Daten und eine Datenverarbeitungseinrichtung aufweist;
Bereitstellen eines oder mehrerer Kommunikationspartner (20), die jeweils eine Sendeeinrichtung (21, 22, 23) zur Übermittlung, vorzugsweise drahtlos, von Daten und vorzugsweise eine Empfangseinrichtung (21, 22, 23) zum Empfang, vorzugsweise drahtlos, von Daten aufweisen; wobei
die Sende- und Empfangseinrichtungen (21, 22, 23) eingerichtet sind, um zwischen dem unbemannten Fahrzeug (10) und dem Kommunikationspartner (20) Daten auszutauschen,
zum Übermitteln von Daten von dem Kommunikationspartner (20) an das unbemannte Fahrzeug (10) sich das unbemannte Fahrzeug (10) an einen Übertragungsort in Kommunikationsnähe des Kommunikationspartners (20) begibt, um anschließend den Datenaustausch vorzunehmen,
die Datenverarbeitungseinrichtung so eingerichtet ist, dass sie die vom Kommunikationspartner (20) empfangenen Daten auswerten kann, um Informationen über den Betriebszustand des Kommunikationspartners (20) zu gewinnen, und
wenigstens einer der Kommunikationspartner (20) ein Bauteil einer Industrieanlage ist, das so eingerichtet ist, dass es Betriebsdaten eigenständig aufzeichnen und an das am Übertragungsort befindliche unbemannte Fahrzeug (10) übertragen kann.

2. Verfahren nach Anspruch 1,
**dadurch gekennzeichnet, dass** das unbemannte Fahrzeug (10) und/oder der Kommunikationspartner (20) einen Zeit- und/oder Ortsstempel und/oder eine Komponenten-ID austauschen und mitprotokolieren.

3. Verfahren nach Anspruch 1 oder 2,
**dadurch gekennzeichnet, dass** die Datenverarbeitungseinrichtung des unbemannten Fahrzeugs (10) ein embedded system ist und/oder einen Mikro-PC aufweist.

4. Verfahren nach einem der vorigen Ansprüche,
**dadurch gekennzeichnet, dass** das unbemannte Fahrzeug (10) als Ergebnis der Auswertung Maßnahmen zur Wartung des Kommunikationspartners (20) und/oder zur Prozessführung in der Industrieanlage trifft.

5. Verfahren nach einem der vorigen Ansprüche,
**dadurch gekennzeichnet, dass** die Datenverarbeitungseinrichtung des unbemannte Fahrzeugs (10) so eingerichtet ist, dass diese, vorzugsweise in Zusammenwirkung mit der Sende- und Empfangseinrichtung des unbemannten Fahrzeugs (10), einen Diagnosemodus des Kommunikationspartners (20) aktivieren kann.

6. Verfahren nach einem der vorigen Ansprüche,
**dadurch gekennzeichnet, dass** die Datenverarbeitungseinrichtung des unbemannte Fahrzeugs (10) so eingerichtet ist, dass diese ein aktuelles oder zukünftiges Betriebsversagen des Kommunikationspartners (20) erkennen kann.

7. Verfahren nach einem der vorigen Ansprüche,
**dadurch gekennzeichnet, dass** das unbemannte Fahrzeug (10) ein Ergebnis der Auswertung an einen oder mehrere andere Kommunikationspartner (20) übertragen kann.

8. Verfahren nach einem der vorigen Ansprüche,
**dadurch gekennzeichnet, dass** das unbemannte Fahrzeug (10) als Ergebnis der Auswertung selbstständig ein Wartungsintervall und/oder Prüfintervall beim Kommunikationspartner (20) anpassen kann.

9. Verfahren nach einem der vorigen Ansprüche,
**dadurch gekennzeichnet, dass** das Bauteil (20) eine Rolle, etwa Arbeitswalze, Stützwalze oder Transportrolle in einem Walzwerk; eine Antriebsvorrichtung, etwa ein Elektromotor; oder ein Drehlager ist.

10. Verfahren nach einem der vorigen Ansprüche,
**dadurch gekennzeichnet, dass** das unbemannte Fahrzeug (10) eine autarke Energiequelle, vorzugsweise einen Akku, für den Betrieb des unbemannten Fahrzeugs (10) aufweist und am Übertragungsort vorzugsweise eine Einrichtung zum automatischen Laden, Nachfüllen und/oder Austausch der Energiequelle vorgesehen ist.

11. Verfahren nach einem der vorigen Ansprüche,
**dadurch gekennzeichnet, dass** das unbemannte Fahrzeug (10) ein unbemanntes Luftfahrzeug ist, vorzugsweise ein Multikopter, wobei vorzugsweise am Übertragungsort eine Landeplattform vorgesehen ist, auf der das unbemannte Luftfahrzeug zum Datenaustausch landet.

12. Verfahren nach einem der vorigen Ansprüche,
**dadurch gekennzeichnet, dass** das unbemannte Fahrzeug (10) so eingerichtet ist, dass es von einem Übertragungsort aus mit mehreren Kommunikationspartnern (20) Daten austauschen kann.

13. Verfahren nach einem der vorigen Ansprüche,
**dadurch gekennzeichnet, dass** mehrere Kommunikationspartner (20) vorgesehen sind, wobei einer der Kommunikationspartner eine Basis (30) ist, die so eingerichtet ist, dass sie Daten, die sie von dem unbemannten Fahrzeug (10) empfängt, zur Überwachung und/oder Steuerung des Produktionsprozesses der Industrieanlage weiterverarbeiten kann, wobei vorzugsweise der Datenaustausch zwischen dem unbemannten Fahrzeug (10) und der Basis (30) und zwischen dem unbemannten Fahrzeug (10) und einem oder mehreren weiteren Kommunikationspartnern (20) über denselben Übertragungskanal, vorzugsweise mittels derselben Funkfrequenz, erfolgt.

14. Verfahren nach einem der vorigen Ansprüche,
**dadurch gekennzeichnet, dass** die Sendeleistung des unbemannten Fahrzeugs (10) größer ist, als die des Kommunikationspartners (20).

15. Verfahren nach einem der vorigen Ansprüche,
**dadurch gekennzeichnet, dass** das unbemannte Fahrzeug (10) so eingerichtet ist, dass es den Übertragungskanal, vorzugsweise die Funkfrequenz, zum Datenaustausch anpassen kann, wobei die Anpassung des Übertragungskanals vorzugsweise in Abhängigkeit des Kommunikationspartners (20) und/oder des Aufenthaltsorts des unbemannten Fahrzeugs (10) und/oder der Entfernung des unbemannten Fahrzeugs (10) zum Kommunikationspartner (20) und/oder der freien Übertragungskanäle in der Industrieanlage und/oder der zu übertragenden Datenmenge erfolgt.

16. System zur Prozessüberwachung in einer Industrieanlage, insbesondere einer hüttentechnischen Anlage, besonders bevorzugt in einem Kalt- oder Warmwalzwerk, einer Bandbehandlungsanlage oder einem Stahlwerk, wobei in der Industrieanlage Daten vorzugsweise drahtlos ausgetauscht werden, wobei das System aufweist:
wenigstens ein unbemanntes Fahrzeug (10), das eine Sende- und Empfangseinrichtung zur Übermittlung, vorzugsweise drahtlos, und zum Empfang, vorzugsweise drahtlos, von Daten und eine Datenverarbeitungseinrichtung aufweist;
einen oder mehrere Kommunikationspartner (20), die jeweils eine Sendeeinrichtung (21, 22, 23) zum Übermitteln, vorzugsweise drahtlos, von Daten und vorzugsweise eine Empfangseinrichtung (21, 22, 23) zum Empfang, vorzugsweise drahtlos, von Daten aufweisen; wobei wenigstens einer der Kommunikationspartner (10, 20, 30) ein Bauteil (20) einer Industrieanlage ist, das so eingerichtet ist, dass es Betriebsdaten eigenständig aufzeichnen und an das am Übertragungsort befindliche unbemannte Fahrzeug (10) übertragen kann, und wobei
die Sende- und Empfangseinrichtungen (21, 22, 23) eingerichtet sind, um zwischen dem unbemannten Fahrzeug (10) und dem Kommunikationspartner (20) Daten auszutauschen, und wobei
das System eingerichtet ist, um ein Verfahren nach einem der vorigen Ansprüche durchzuführen.

## Claims

1. Method for process monitoring in an industrial facility, particularly a metallurgical plant, particularly preferably in a cold-rolling or hot-rolling mill, a strip treatment plant or a steelworks, wherein data is exchanged in the industrial facility preferably wirelessly, wherein the method comprises:
providing at least one unmanned vehicle (10) which comprises a transmitting and receiving device for transmission, preferably wirelessly, and reception, preferably wirelessly, of data and a data processing device;
providing one or more communication partners (20) each comprising a transmitting device (21, 22, 23) for transmission, preferably wirelessly, of data and preferably a receiving device (21, 22, 23) for reception, preferably wirelessly, of data; wherein
the transmitting and receiving devices (21, 22, 23) are arranged to exchange data between the unmanned vehicle (10) and the communication partner (20),
for transmission of data from the communication partner (20) to the unmanned vehicle (10) the unmanned vehicle (10) moves to a transfer location in communication proximity to the communication partner (20) in order to subsequently undertake data exchange,
the data processing device is so arranged that it can evaluate data, which are received from the communication partner (20), in order to obtain information about the operating state of the communication partner (20), and
at least one of the communication partners (20) is a component of an industrial facility, which is so arranged that it can independently record operating data and transfer the operating data to the unmanned vehicle (10) present at the transfer location.

2. Method according to claim 1, **characterised in that** the unmanned vehicle (10) and/or the communication partner (20) exchange and conjunctively register a time and/or place stamp and/or a component identification.

3. Method according to claim 1 or 2, **characterised in that** the data processing device of the unmanned vehicle (10) is an embedded system and/or a micro-PC.

4. Method according to any one of the preceding claims, **characterised in that** the unmanned vehicle (10) as a result of the evaluation undertakes measures for maintenance of the communication partner (20) and/or for process guidance in the industrial facility.

5. Method according to any one of the preceding claims, **characterised in that** the data processing device of the unmanned vehicle (10) is so arranged that this can activate, preferably in co-operation with the transmitting and receiving device of the unmanned vehicle (10), a diagnostic mode of the communication partner (20).

6. Method according to any one of the preceding claims, **characterised in that** the data processing device of the unmanned vehicle (10) is so arranged that this can recognise a current or future operating failure of the communication partner (20).

7. Method according to any one of the preceding claims, **characterised in that** the unmanned vehicle (10) can communicate a result of the evaluation to one or more other communication partners (20).

8. Method according to any one of the preceding claims, **characterised in that** the unmanned vehicle (10) as a result of the evaluation can independently adapt a maintenance interval and/or check interval at the communication partner (20).

9. Method according to any one of the preceding claims, **characterised in that** the component (20) is a roller, for example working roll, backing roll or transport roller in a rolling mill, a drive device, for example an electric motor, or a rotary bearing.

10. Method according to any one of the preceding claims, **characterised in that** the unmanned vehicle (10) has an autonomous energy source, preferably a battery, for operation of the unmanned vehicle (10) and at the transfer location a device for automatic charging, recharging and/or exchange of the energy source is preferably provided.

11. Method according to any one of the preceding claims, **characterised in that** the unmanned vehicle (10) is an unmanned aircraft, preferably a multicopter, wherein a landing platform on which the unmanned aircraft lands for data exchange is preferably provided at the transfer location.

12. Method according to any one of the preceding claims, **characterised in that** the unmanned vehicle (10) is so arranged that from a transfer location it can exchange data with several communication partners (20).

13. Method according to any one of the preceding claims, **characterised in that** a plurality of communication partners (20) is provided, wherein one of the communication partners is a base (30) which is so arranged that it can further process data, which it receives from the unmanned vehicle (10), for monitoring and/or control of the production process of the industrial facility, wherein the data exchange between the unmanned vehicle (10) and the base (30) and between the unmanned vehicle (10) and one or more further communication partners (20) preferably takes place by way of the same transfer channel, preferably by means the same radio frequency.

14. Method according to any one of the preceding claims, **characterised in that** the transmission power of the unmanned vehicle (10) is greater than that of the communication partner (20).

15. Method according to any one of the preceding claims, **characterised in that** the unmanned vehicle (10) is so arranged that it can adapt the transfer channel, preferably the radio frequency, for the data exchange, wherein the adaptation of the transfer channel is preferably carried out in dependence on the communication partner (20) and/or the location of the unmanned vehicle (10) and/or the distance of the unmanned vehicle (10) from the communication partner (20) and/or the free transfer channels in the industrial facility and/or the amount of data to be transferred.

16. System for process monitoring in an industrial facility, particularly a metallurgical plant, particularly preferably in a cold-rolling or hot-rolling mill, a strip treatment plant or a steelworks, wherein data is exchanged in the industrial facility preferably wirelessly, wherein the method comprises:
at least one unmanned vehicle (10) which comprises a transmitting and receiving device for transmission, preferably wirelessly, and reception, preferably wirelessly, of data and a data processing device;
one or more communication partners (20) each comprising a transmitting device (21, 22, 23) for transmission, preferably wirelessly, of data and preferably a receiving device (21, 22, 23) for reception, preferably wirelessly, of data; wherein at least one of the communication partners (10, 20, 30) is a component (20) of an industrial facility which is so arranged that it can independently record operating data and can transfer the data to the unmanned vehicle (10) present at the transfer location, wherein
the transmitting and receiving devices (21, 22, 23) are arranged to exchange data between the unmanned vehicle (10) and the communication partner (20), and wherein
the system is arranged to perform a method according to any one of the preceding claims.

## Revendications

1. Procédé pour la surveillance de processus dans une installation industrielle, en particulier dans une installation sidérurgique, de manière particulièrement préférée dans un laminoir à froid ou un laminoir à chaud, une installation de transformation de bandes ou une aciérie ; dans lequel, des données sont échangées dans l'installation industrielle, de préférence sans fil ; dans lequel le procédé présente :
le fait de procurer au moins un véhicule sans conducteur (10) qui présente un mécanisme d'envoi et un mécanisme de réception pour le transfert, de préférence sans fil et pour la réception, de préférence sans fil, de données, de même qu'un mécanisme de traitement des données ;
le fait de procurer un ou plusieurs partenaires de communication (20) qui présentent respectivement un mécanisme d'envoi (21, 22, 23) pour le transfert, de préférence sans fil, de données, et de préférence un mécanisme de réception (21, 22, 23) pour la réception, de préférence sans fil, de données ; dans lequel
les mécanismes d'envoi et de réception (21, 22, 23) sont conçus pour échanger des données entre le véhicule sans conducteur (10) et le partenaire de communication (20) ;
à des fins de transfert de données depuis le partenaire de communication (20) jusqu'au véhicule sans conducteur (10), le véhicule sans conducteur (10) se rend à un endroit de transfert dans une proximité de communication du partenaire de communication (20) pour ensuite procéder à l'échange de données ;
le mécanisme de traitement des données est conçu d'une manière telle qu'il peut évaluer les données reçues à partir du partenaire de communication (20) afin d'obtenir des informations qui concernent l'état de fonctionnement du partenaire de communication (20) ; et
au moins un des partenaires de communication (20) représente un élément constitutif d'une installation industrielle, qui est conçu d'une manière telle qu'il peut enregistrer de manière autonome des données d'exploitation et qu'il peut les transférer au véhicule sans conducteur (10) se trouvant à l'endroit de transfert.

2. Procédé selon la revendication 1, **caractérisé en ce que** le véhicule sans conducteur (10) et/ou le partenaire de communication (20) échangent et consignent de manière conjointe un marqueur temporel et/ou un marqueur de localisation et/ou un identifiant d'un composant.

3. Procédé selon la revendication 1 ou 2, **caractérisé en ce que** le mécanisme de traitement des données du véhicule sans conducteur (10) représente un système embarqué et/ou présente un micro-ordinateur.

4. Procédé selon l'une quelconque des revendications précédentes, **caractérisé en ce que** le véhicule sans conducteur (10) prend, à titre de résultat de l'évaluation, des mesures pour l'entretien du partenaire de communication (20) et/ou pour la conduite du processus dans l'installation industrielle.

5. Procédé selon l'une quelconque des revendications précédentes, **caractérisé en ce que** le mécanisme de traitement des données du véhicule sans conducteur (10) est conçu d'une manière telle qu'il peut activer, de préférence en collaboration avec le mécanisme d'envoi et de réception du véhicule sans conducteur (10), un mode diagnostique du partenaire de communication (20).

6. Procédé selon l'une quelconque des revendications précédentes, **caractérisé en ce que** le mécanisme de traitement des données du véhicule sans conducteur (10) est conçu d'une manière telle qu'il peut reconnaître une défaillance fonctionnelle actuelle ou future du partenaire de communication (20).

7. Procédé selon l'une quelconque des revendications précédentes, **caractérisé en ce que** le véhicule sans conducteur (10) peut transférer un résultat de l'évaluation à un ou à plusieurs autres partenaires de communication (20).

8. Procédé selon l'une quelconque des revendications précédentes, **caractérisé en ce que** le véhicule sans conducteur (10) peut adapter, à titre de résultat de l'évaluation, de manière autonome, un intervalle de maintenance et/ou un intervalle d'essai auprès du partenaire de communication (20).

9. Procédé selon l'une quelconque des revendications précédentes, **caractérisé en ce que** l'élément constitutif (20) représente un rouleau, par exemple un cylindre de travail, un cylindre de soutien ou un rouleau de transport dans un laminoir; un dispositif d'entraînement, par exemple un moteur électrique ; ou un palier rotatif.

10. Procédé selon l'une quelconque des revendications précédentes, **caractérisé en ce que** le véhicule sans conducteur (10) présente une source d'énergie autarcique, de préférence un accumulateur, pour le fonctionnement du véhicule sans conducteur (10) et, à l'endroit de transfert, est prévu de préférence un mécanisme pour le chargement, le rechargement et/ou le remplacement de la source d'énergie.

11. Procédé selon l'une quelconque des revendications précédentes, **caractérisé en ce que** le véhicule sans conducteur (10) représente un véhicule aérien télécommandé, de préférence un multicoptère ; dans lequel, de préférence à l'endroit de transfert, est prévue une plate-forme d'atterrissage sur laquelle atterrit le véhicule aérien télécommandé à des fins d'échange de données.

12. Procédé selon l'une quelconque des revendications précédentes, **caractérisé en ce que** le véhicule sans conducteur (10) est conçu d'une manière telle qu'il peut échanger des données à partir d'un endroit de transfert avec plusieurs partenaires de communication (20).

13. Procédé selon l'une quelconque des revendications précédentes, **caractérisé en ce que** l'on prévoit plusieurs partenaires de communication (20) ; dans lequel un des partenaires de communication représente une base (30) qui est conçue d'une manière telle qu'elle peut soumettre à un traitement ultérieur des données qu'elle reçoit à partir du véhicule sans conducteur (10) à des fins de surveillance et/ou de commande du processus de production de l'installation industrielle; dans lequel de préférence l'échange de données entre le véhicule sans conducteur (10) et la base (30) et entre le véhicule sans conducteur (10) et un ou plusieurs autres partenaires de communication (20) a lieu par l'intermédiaire du même canal de transfert, de préférence au moyen de la même fréquence radio.

14. Procédé selon l'une quelconque des revendications précédentes, **caractérisé en ce que** la puissance d'émission du véhicule sans conducteur (10) est supérieure à celle du partenaire de communication (20).

15. Procédé selon l'une quelconque des revendications précédentes, **caractérisé en ce que** le véhicule sans conducteur (10) est conçu d'une manière telle qu'il peut adapter le canal de transfert, de préférence la fréquence radio, à des fins d'échange de données ; dans lequel l'adaptation du canal de transfert a lieu en fonction du partenaire de communication (20) et/ou de l'endroit de séjour du véhicule sans conducteur (10) et/ou de l'éloignement du véhicule sans conducteur (10) par rapport au partenaire de communication (20) et/ou des canaux de transfert libres dans l'installation industrielle et/ou de la quantité de données à transférer.

16. Système pour la surveillance de processus dans une installation industrielle, en particulier dans une installation sidérurgique, de manière particulièrement préférée dans un laminoir à froid ou un laminoir à chaud, une installation de transformation de bandes ou une aciérie ; dans lequel, des données sont échangées dans l'installation industrielle, de préférence sans fil ; dans lequel le système présente :
au moins un véhicule sans conducteur (10) qui présente un mécanisme d'envoi et de réception pour le transfert, de préférence sans fil, et pour la réception, de préférence sans fil, de données, ainsi qu'un mécanisme de traitement des données ;
un ou plusieurs partenaires de communication (20) qui présentent respectivement un mécanisme d'envoi (21, 22, 23) pour le transfert, de préférence sans fil, de données, et un mécanisme de réception (21, 22, 23) pour la réception, de préférence sans fil, de données ;
dans lequel au moins un des partenaires de communication (10, 20, 30) représente un élément constitutif (20) d'une installation industrielle, qui est conçu d'une manière telle qu'il peut, de manière autonome, enregistrer des données d'exploitation et les transférer au véhicule sans conducteur (10) se trouvant à l'endroit de transfert ; et
dans lequel
les mécanismes d'envoi et de réception (21, 22 ,23) sont conçus pour échanger des données entre le véhicule sans conducteur (10) et le partenaire de communication (10, 20, 30) ; et dans lequel le système est conçu pour la mise en oeuvre d'un procédé selon l'une quelconque des revendications précédentes.
